(19) **Europäisches Patentamt / European Patent Office / Office européen des brevets**

(11) **EP 2 294 447 B1**

(12) **EUROPEAN PATENT SPECIFICATION**

(45) Date of publication and mention
of the grant of the patent:
**04.11.2015 Bulletin 2015/45**

(51) Int Cl.:
***G01S 7/48*** (2006.01)

(21) Application number: **09742406.3**

(22) Date of filing: **08.05.2009**

(86) International application number:
**PCT/GB2009/050490**

(87) International publication number:
**WO 2009/136210 (12.11.2009 Gazette 2009/46)**

(54) **REMOTE SENSING SYSTEM**

FERNMESSSYSTEM

SYSTÈME DE DÉTECTION À DISTANCE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **08.05.2008 GB 0808340**

(43) Date of publication of application:
**16.03.2011 Bulletin 2011/11**

(73) Proprietor: **The University Court Of
The University of Edinburgh
Edinburgh, Lothian EH8 9YL (GB)**

(72) Inventors:
• **WOODHOUSE, Iain
Linlithgow
Lothian EH49 7RB (GB)**

• **NICHOL, Caroline
Edinburgh
Lothian EH13 0PJ (GB)**
• **PATENAUDE, Genevieve
Edinburgh
Lothian EH9 1EB (GB)**
• **MALTHUS, Timothy, John
Edinburgh
Lothian EH1 2EL (GB)**

(74) Representative: **Towlson, Samantha Jayne et al
Murgitroyd & Company
Scotland House
165-169 Scotland Street
Glasgow G5 8PL (GB)**

(56) References cited:
**DE-A1-102005 030 451**

**Description**

The invention relates to environmental remote sensing, particularly sensing of vegetation properties from air- or space-borne platforms.

The system is intended principally for use as a remote sensing instrument with the measurements made from above a vegetation canopy (on a tower, balloon, aircraft, satellite or any other high platform). It has long been recognised that remote sensing techniques could be very valuable in the monitoring of the health of ecosystems. A conventional approach to this is to use sensors responsive to a pair of different wavelengths, and use ratios of intensity between the wavelengths to distinguish green foliage (containing chlorophyll) from dead and inorganic matter. A paper surveying various developments in this field is Grace, J, Nichol, C.J., Disney, M, Lewis, P & Quaife, T (2007) "Can we measure terrestrial photosynthetic rate from space directly, using reflectance and fluorescence", Global Change Biology 13 : 1-14. That paper includes references to prior studies which provide the scientific background and support for the techniques to be described. The detail of those references is not required for an understanding of the present invention.

Another remote sensing technique is light detection and ranging (lidar), which can provide very precise maps of height, by measuring time of flight of pulses of laser light transmitted from a flying platform and reflected back by the ground or vegetation. Lidar is useful for example to distinguish features of a forest canopy and 'understoreys' from the forest floor.

Instruments are known that that combine an active lidar instrument for structure and a passive multi-spectral imaging sensor for spectral reflectance information. However the known instruments have various certain limitations:

- they suffer shadowing if passive sensor requires solar illumination (and are therefore less likely to detect surface or understorey sensitivity).
- they require two different sensors working in combination that need to be co-registered. This is often problematic and suffer from spatial resolution differences

NASA Biospheric Lidar, described at http://techtransfer.gsfc.nasa.gov/ft-tech-multi-wave-lidar.html measures two wavelengths and is designed to measure chlorophyll while revealing structure. It makes no mention/use of polarisation. Unfortunately, measurement of chlorophyll alone is a poor indicator of health in the vegetation, as a plant may remain green while suffering a range of conditions indicating stress and inefficient feeding. DE 10 2005 030 451 A1 concerns a procedure and a device to evaluate vegetation on transportation routes. Spectral evaluation using at least two different wavelengths is used to determine the difference in reflectivity between regions of vegetation and regions of non-vegetation. The inventors aim to provide more comprehensive measurement of vegetation biophysical properties as a function of height above the ground from towers, aircraft and satellite. Specifically, leaf area, leaf angle, the chlorophyll and xanthophylls concentrations and water absorption. Each provides information on physiology, photosynthesis and water stress.

The invention provides a method for the remote analysis of vegetation, the method comprising:

- providing a remote sensing platform;
- generating at said platform modulated emissions of laser radiation each having a different wavelength;
- directing said emissions from said platform toward a target;
- detecting radiation reflected by the target at each of said wavelengths;
- measuring for each wavelength the reflected intensity as it varies with time of flight, thereby to provide for each wavelength a measured profile (LOG) of intensity over a range of distances from the platform; and
- combining the intensities of reflected radiation in said profiles measured at first and second wavelengths to obtain a profile of at least one derived parameter (NDVI, PRI, NDWI) of said target over said range of distances;

wherein there are at least four wavelengths directed and detected, a profile for a first derived parameter being derived from combination of the profiles measured for first and second wavelengths and a profile for a second derived parameter being derived from the profiles measured third and fourth wavelengths; wherein the plurality of wavelengths include a pair that are both in the visible region of the electromagnetic spectrum, one of them selected to be affected by de-epoxidation of xanthophyll pigments while the other remains unaffected by the de-epoxidation reaction, and wherein a profile (PRI) is obtained by combining the measured profiles of said pair of wavelengths; wherein the plurality of wavelengths further includes a pair of wavelengths of which one is in the infrared region of the electromagnetic spectrum and the other is in the red region, and wherein a profile (NDVI) is obtained by combining the measured profiles of said pair of wavelengths; and wherein the profile (PRI) obtained is multiplied in three dimensions with the profile (NDVI) obtained to obtain an estimation of carbon uptake in the analysed vegetation.

Said modulated emissions may comprise simple pulse trains, chirps or continuous coded waveforms, whereby the strengths of reflections of the different emissions can be recognised and timed in the received signals. The laser radiation may be generated by a separate laser for each wavelength, or by a tuneable laser switched to different wavelengths sequentially.

In a preferred embodiment, the detector for each wavelength is sensitive to a band of wavelengths less than 10nm wide, preferably less than 2nm. Reducing the bandwidth of detection improves the signal to noise ratio (SNR).

The wavelength selected to be affected by de-epoxidation may be substantially 531nm. A selective detector with a selection band including 531 nm and having a width (FWHM) of 8nm or less, preferably 3-6nm, is suitable. The reference wavelength may be in the range 540 - 590nm, for example around 550nm or around 570nm. These reference wavelengths are effectively located on the shoulder of the 531 nm response. 550nm is selected for this purpose in some prior references. Other sources prefer a reference wavelength around 570nm, and 571nm in particular seems attractive in practice.

In such an embodiment, the plurality of wavelengths may include a pair of wavelengths both in the infrared region of the electromagnetic spectrum, one of them selected to be particularly absorbed by water while the other is relatively unaffected, and a parameter derived from said pair is indicative of water stress in foliage at each distance. The reference of wavelength may be around 860nm (say 840 - 880nm), while the water-sensitive wavelength is around 1200nm (say 1180 - 1280nm), for example, or around 1660nm (1620 - 1690nm, say).

The method may further include detection of radiation received from the target at at least one further wavelength not among those directed at the target from the platform, said wavelength being one at which chlorophyll fluorescence is observable. This fluorescence may be caused by excitation by one of the laser wavelengths directed at the target from the platform, or by incident sunlight or a separate source. The detection is preferably made with a selectivity better than 2nm, preferably better than 0.5nm, the wavelength being coincident with a trough in the spectrum of solar radiation typical at the earth's surface. Such fine resolution is referred to generally as hyperspectral detection. The trough may one caused by a Fraunhofer line in the solar radiation (for example, the one at 656.3nm) or one caused by atmospheric absorption, as for example absorption by oxygen at 760nm. More than one further wavelength may be detected and measurements combined to improve SNR accuracy. Time gating may be applied to discriminate between actively stimulated fluorescence and passive (solar-induced) fluorescence signals.

In a preferred embodiment the detection discriminates polarised and non-polarised components of the reflected radiation. Either or both can be measured. The non-polarised component in particular represents composition deeper in the target surface.

The method may be performed from an airborne platform or spacecraft.

By use of these techniques, which can be adapted to yield better estimates of known indices or novel indices usable in future, more accurate assessment of vegetation condition can be made, and estimates of carbon take-up important for monitoring impact on climate change. In particular, values can be calculate and integrated over three dimensions, instead of being lumped or extrapolated from incomplete two-dimensional data. A preferred embodiment of the invention combines the values calculated in order to calculate gross primary productivity (GPP).

An apparatus is also provided, adapted for performance of the method. The apparatus may employ tuneable lasers for emission of desired wavelengths. The apparatus may employ photon-counting detectors to maximise sensitivity while maintaining eye-safe emission powers

The above and other features and aspects of the invention will be understood more fully from a consideration of the specific description which follows.

BRIEF DESCRIPTION OF THE DRAWINGS

Embodiments of the invention will now be described, by way of example only, by reference to the accompanying drawings, in which:

Figure 1 shows the principles of light direction and rangefinding (LIDAR) systems in an airborne survey application;

Figure 2 illustrates the formation of distance profiles in (a) conventional LIDAR and (b) a novel multispectral LIDAR instrument;

Figure 3 is a schematic block diagram of the novel multi-spectral LIDAR instrument;

Figure 4 illustrates the typical reflectance spectrum of vegetation across the visible and infrared bands; and

Figure 5 illustrates portions of the reflectance spectrum defined for use in known systems.

DETAILED DESCRIPTION OF THE EMBODIMENTS

**Background -** Lidar System

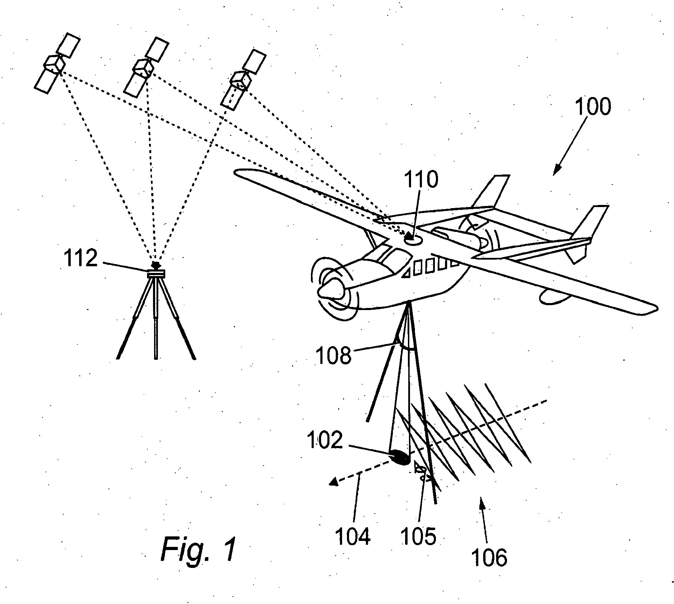

The technology of lidar for mapping ground topography from an aircraft or other elevated platform is well established. A typical set-up is shown in Figure 1. A light aircraft 100 provides the elevated platform, for example 1200m above the ground. A laser and optical system mounted beneath the aircraft emits a narrow beam of light (light here includes IR and UV radiation) in pulses, to project spots 102 of light onto the ground or other surface below. The light reflected from each spot is picked up through the optical system, and its time of flight is analysed to determine the height of the surface below. A vertical accuracy of 15cm or so can be readily achieved. The plane 100 flies steadily along a track 104, while the laser beam is scanned back and forth along a series of scanning lines 105 to scan a swath 106 several hundred metres wide. For example, if the scan angle 108 is 30 degrees or so, a swath 650m wide can be scanned from a platform altitude of 1200m.

Each spot of light may be typically 30cm in diameter. Using the example figures above and a pulse rate of 33kHz, the flight speed and scanning rate can be adjusted to sample the surface every 1.5m along a scan line, and to separate the scan lines 1.5m apart, so that a 2-D array of evenly spaced samples is obtained.

By flying the plane in parallel tracks 104, a complete scan of an area can be performed. A GPS receiver 110 is provided on board both to guide the pilot, and to provide position data for recording as part of the lidar data set. A GPS ground station 112 can be included so that the GPS position data in the recorded data set can be corrected to eliminate systematic noise and achieve higher accuracy.

This is a known technique and need not be described further. The aircraft's GPS and inertial navigation system (INS) comprising a six-axis inertial measurement unit (IMU) and has a positional accuracy of 2cm and 0.1 degrees for heading. The lidar instrument is integrated with this GPS/INS system to use the same data.

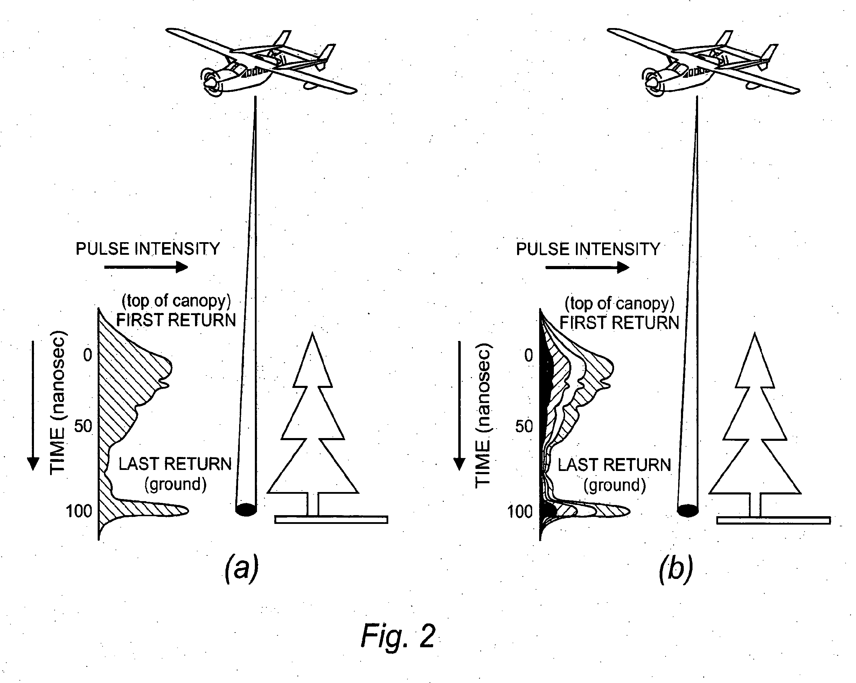

Figure 2 (a) shows the interaction of one laser pulse with ground and vegetation in the conventional lidar altimetry system. In operation, a pulse of laser light is directed towards the surface, it is scattered/reflected at the ground surface and this signal is measured as it returns to the instrument. It is possible to measure both the intensity of the returned signal and the time delay between transmission of the pulse and its return. Since the speed of light is well-defined for a given atmosphere, the distance can be calculated from the instrument to the scattering target. When a vegetation canopy is located above the ground, the light may be scattered from different elements of the canopy and from the ground beneath. By measuring the change in the intensity of the signal as a function of time, it is possible to infer the vertical structure of the vegetation. A graph of pulse intensity against time (vertical axis) is juxtaposed with the subject in Figure 2(a) to illustrate the correlation between this intensity/time trace and the vertical distribution of reflective surfaces (ground and vegetation).

**Multispectral Reflection Lidar System**

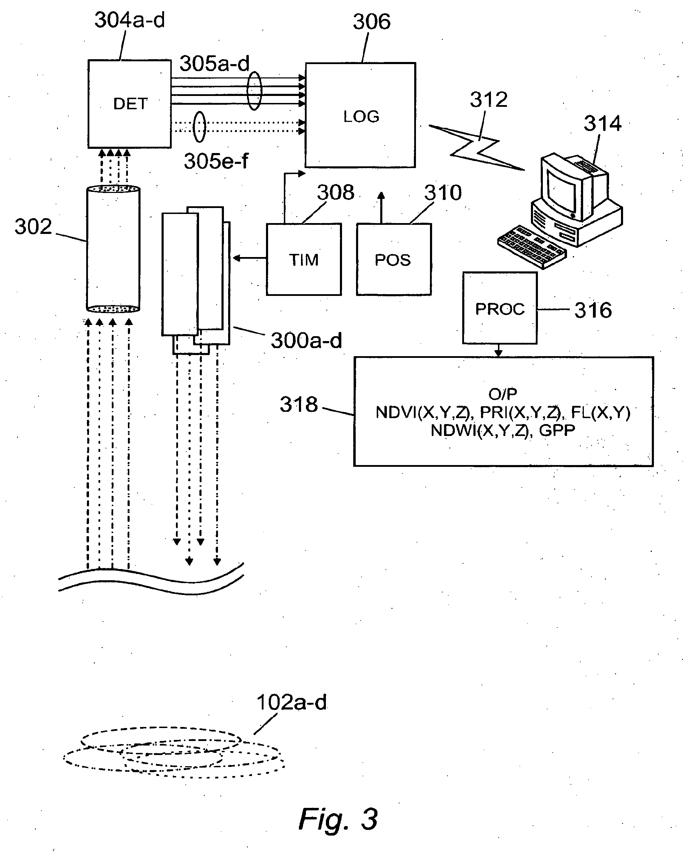

Figure 3 is a block schematic diagram of a novel multispectral selective reflection Lidar system which generates light pulses of at least four distinct wavelengths a, b, c, d and senses returns at these transmitted wavelengths separately. The system is intended principally for use as a remote sensing instrument with the measurements made from above a vegetation canopy (on a tower, balloon, aircraft, satellite or any other high platform). The wavelengths are chosen to coincide with key points in the reflection spectra of terrestrial vegetation (details below). The airborne data acquisition apparatus thus comprises four laser sources 300a-d, each with its own characteristic wavelength, all aligned to project their light spots 102a-d on the same ground/vegetation target. A telescope 302 receives these and passes them to a set of narrowband detectors 304a-d.

Each detector 304a-d includes components sensitive specifically to one of the four distinct wavelengths, preferably with a selectivity better than 2nm. The four time-versus-intensity traces 305a-d are recorded in a data recorder 306. Recorder 306 receives timing data from a synchronising unit 308 which also controls the emission of pulses, and receives position data from the GPS module 310.

As in known Lidar systems, the lasers sources would in practice be directed through the same optical system as the detector, using beam splitters and optical layouts well within the capability of the skilled person familiar with Lidar design. Also for practical implementation the pulses at different wavelengths can be emitted at staggered timings rather than simultaneously, to simplify the recording of data.

Knowing the timing and duration of the emitted pulses, coupled with baseline (background) measurements, the reflected lidar signals can be separated from the background radiation at the same wavelengths. Alternative implementations are of course possible, for example to use one or more tuneable lasers in place of two or more separate lasers. Simple pulse trains can be replaced by more complex chirp or continuous code modulation schemes, if desired. These may be to improve SNR and/or increase the resolution on the ground. Techniques of this sort known from single-wavelength lidar systems can be applied in a straightforward manner to the multiple wavelengths of the present system.

Additional narrowband detectors 304e-f may be provided to measure radiation at wavelengths not emitted by sources 300a-d. (These may represent reflection of solar radiation, or fluorescence, as discussed further below.) Corresponding data samples 305e-f are recorded in log 306 along with the data 305a-d.

A data link 312 transfers the logged data set to a computer system 314 which implements processing 316 to generate an output data set 318 far more detailed than in the known Lidar system of Figures 1 & 2(a). The data set includes various arrays of data organised for the sake of illustration on X and Y axes, with resolution also in the vertical Z direction. The co-ordinate system is of course somewhat arbitrary - in its raw form, X may be an index across one scan 105, Y can be scan number along the track 104. At some point in the analysis, these coordinates will typically be translated to some metre or kilometre grid, or to latitude and longitude positions. The vertical Z can be absolute above sea level, or referenced to the ground at each location. The data sets may include a separate array recording the ground height at each X, Y location. Such details of the implementation are of course important in practice but do not alter the principles of the invention.

Where the responses at different wavelengths are to be combined to obtain one parameter (such as NDVI, PRI or NDWI, discussed below), these combinations can be made before recording, if preferred. In practice, where storage space is not a major constraint, it will be preferred that the raw wavelength samples be recorded and combined values calculated later, to maintain a record of the source data for investigation of anomalies and audit purposes, and to allow experimentation with different modes of analysis. Similarly, where transformation of co-ordinates is required to map data from "sample number, scan number" to latitude and longitude or the like, it is a matter of design choice whether this is done on the raw wavelength samples, prior to obtaining the desired vegetation index values, or afterwards.

Many practical issues not material to the invention as such will of course be addressed in a real implementation. This will include for example calibration to compensate delays between the laser pulse trigger signal and emission of the pulse itself. This delay can be different for different wavelengths or power settings, for example in the case of an optical parametric oscillator-based tuneable laser. It may be compensated, or the actual pulse output may be measured instead as a timing reference. Time delays such as this can be equated to height errors in the resulting profile and compensated downstream if preferred. The pulse length will result in 'smoothing' of vertical resolution, which again can be tolerated or compensated by de-convolution; or a better laser can be employed. A pulse width of 4.75ns, for example, translates to a height smoothing of 1.4 metres or so.

Other practical issues surrounding airborne laser instrumentation concern eye safety, which implies minimum pulse power and maximum detection sensitivity. Photon counting detectors may therefore be particularly useful. An example photon-counting Lidar instrument is described by Harding et al in "The Swath Imaging Multi-polarization Photon-counting Lidar (SIMPL): A Spaceflight Prototype" (2008 IEEE International Geoscience & Remote Sensing Symposium, July 6-11, 2008, Boston, Massachusetts, U.S.A. not published at the priority date of the present application).

Figure 2(b) illustrates the response of the multispectral instrument in the same format as the conventional lidar illustrated in Figure 2(a). Whereas the conventional instrument provides only a single graphs of reflection intensity versus time (vertical distance), the multi-wavelength instrument produces a number of traces, each representing the intensity of a different wavelength by the ground surface and vegetation material. By comparing these different intensities sampled at each height from the ground to the top of the canopy, the novel instrument can be used to determine the presence of particular pigments within living plants *as a function of height above the ground.*

In a preferred embodiment, the relative proportions of the scattered signals across the four wavelengths reflect the relative abundance of at least two of chlorophyll, xanthophylls and water, preferably all three. In combination, this gives direct information on the physiology and photosynthesis rates, plant health and carbon dioxide uptake *as a function of height above the ground.*

Previous workers have combined altitude-measurement lidar with passive spectral instrumentation to monitor plant health from the sky, but with limited success. Passive sensors are those which detect reflected and scattered solar illumination, in contrast to a lidar system which detects reflections of radiation emitted by the instrument. The novel multispectral lidar sensor enables a number of problems to be overcome compared with those previous attempts to make these measurements. Firstly, it makes the spectral and range measurements from the same location (monostatic) and with its own light source (the lidar emitters). Thus there are no issues to do with solar illumination direction (shadows) in the spectral information and therefore improved information on the vertical distribution of the spectral response. In so doing, it also reduces the uncertainty in establishing which return pulses correspond to canopy, understorey or ground surface. In particular, for survey applications where ground measurements are required, the multi-spectral information will allow the returns from the non-photosynthesising ground surface to be unambiguously distinguished from understorey.

The following sections detail the science of the measurements and the particular choice of wavelengths. Additional options will be described as well.

**Wavelength Selection**

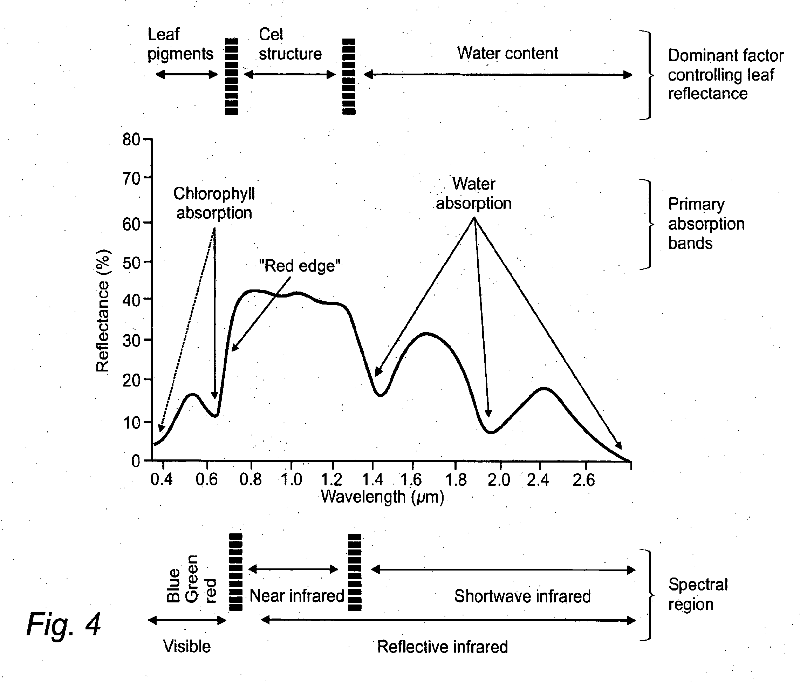

Figure 4 shows the spectral reflectance of vegetation across the visible and infrared bands. All healthy vegetation shows a similar trend. The current description is concerned with reflectance over the entire range of 400nm to 3 microns ($3\mu m$), but takes optimum advantage of the narrow bandwidth sensing available with the lasers used in lidar systems. The active region of the waveband with respect to photosynthesis is usually assumed to be 400 - 700 nm, with the rest of the region being related to cell structure and water content.

By combining the responses of vegetation at different wavelengths, various useful parameters and indices can be defined and measured/calculated, some of which have been defined already in the prior art. Some of these have been measured by remote sensing in the past, but with difficulty, others have been measured only by other means under laboratory conditions or on the ground. Examples will now be described.

**NDVI (Normalized Difference Vegetation Index)**

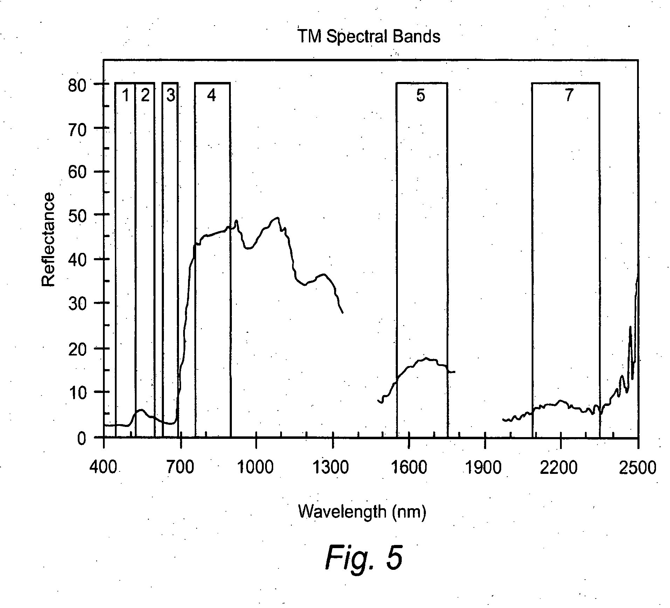

As background, multi-spectral satellite remote sensing of the Earth's surface began in 1972 with the launch of ERTS-1, later renamed LANDSAT 1. It was possible to detect variations in the leafiness of the land cover from its reflectance measured in broad spectral bands. Figure 5 shows these bands numbered 1, 2, 3, 4, 5 and 7 Rouse et al.(1973) proposed a simple index, known as the normalized difference vegetation index (NDVI), based on the reflectances $R_{red}$ and $R_{nir}$ observed respectively in the red (630 - 690nm) and near infrared (760 - 900nm) parts of the solar spectrum (Bands 3 and 4 respectively). The red wavelengths 660nm and/or 690nm and infrared wavelength 780nm might be used, for the sake of example only. The definition of NDVI is:

$$NDVI = (R_{nir} - R_{red}) / (R_{nir} + R_{red}).$$

This index NDVI is essentially a measure of 'greenness': it has been used to estimate the leaf area per unit of land area (leaf area index (LAI)) but it bears a linear relationship with the fraction of solar radiation that green leaves in the canopy absorb (fAPAR). Multiplying the absorbed radiation NDVI by a constant factor known as the Radiation Use Efficiency (RUE or $\varepsilon$) provides a means to estimate the rate of photosynthesis (or biomass accumulation) per land area.

NDVI and other such normalized ratios are known to be affected by topography, variations in viewing and illumination angles, atmospheric influences, and variations in soil brightness but NDVI has been for many years the Earth observation workhorse to quantify vegetation amount and radiation absorbed. For example, some authors have shown how NDVI is increasing in the northern hemisphere, and they have deduced that photosynthesis is therefore increasing, probably as a result of climatic warming. Unfortunately, NDVI measures only the 'greenness' of the land cover and not the process of photosynthesis itself. Consequently, when $\varepsilon$ has been determined from careful ground measurements of the rate of increase in biomass and absorbed radiation it is found to be rather variable. In a review of 13 cases published between 1977 and 1985, Cannell et al. (1987) found that $\varepsilon$ varied from 0.8 to 2.1 g biomass for every MJ (megajoule) of solar radiation absorbed. This variation is not surprising as green leaves, in the short-term (hours or days), remain green but reduce photosynthesis when they are stressed. Only at longer time scales, when prolonged stress causes premature senescence or abscission would stress eventually show as a change in NDVI.

Undoubtedly, NDVI is especially useful for picking up seasonal and interannual variations in the overall 'condition of the canopy', especially in relation to drought, and relating these variations to the capacity of the canopy to photosynthesize. At the same time, the magnitude of $\varepsilon$ is fundamentally determined by the quantum efficiency of photosynthesis, which is known to be reduced by stress factors, which may include extreme temperatures, direct sunlight, or shortage of water and nutrients. Superimposed on this there may be changes in stomatal conductance associated with drought, which will certainly reduce the rate of photosynthesis. Thus, $\varepsilon$ is inherently variable.

## Hyperspectral Sensing

While measurements such as NDVI can be made on a relatively broadband basis, other types of measurement and analysis are possible only with narrowband or 'hyperspectral' sensing. We shall regard bandwidths of 10nm or less as hyperspectral for the purposes of the present description and claims, and note that selectivity under 2nm is preferred in practice, ideally 0.5nm or even 0.1 nm.

## Photochemical Reflectance Index (PRI)

Frequently light exceeds the amount that can be used for photosynthesis. Even for healthy foliage, this happens on most days in bright sunshine. Additionally, stress factors can depress the rate of photosynthesis, for example when bright light and low temperatures are combined, or when drought occurs. At these times, energy is diverted from chlorophyll to the xanthophylls cycle, as part of a process known as non-photochemical quenching (NPQ). This is a protective mechanism, preventing the reaction centres from becoming over-excited and therefore damaged.

It has been noted that dynamic changes in the xanthophyll cycle are accompanied by a reflectance change in a narrow region of the visible spectrum centred at 531nm. This photo-protective mechanism varies over the diurnal time course and also in response to various stress factors acting over longer time scales. Gamon et al, 1992, define a photochemical reflectance index (PRI) to detect unequivocally these changes in reflectance. Their index is based on measurement in two narrow wavebands, one centred on 531 nm, which is affected by the de-epoxidation of the xanthophyll pigments, and a reference waveband centred on 570 nm, which remains unaffected by the de-epoxidation reaction. The photochemical reflectance index (PRI) is expressed as

$$PRI = (R_{531} - R_{570})/(R_{531} + R_{570})$$

where $R_\lambda$ refers to the narrow-band (<2 nm) reflectance centred on the wavelength $\lambda$ in nm. We may note in passing that, although the form of the PRI and NDVI expressions are the same, the wavelengths required for NDVI as defined from LANDSAT-TM bands are quite different and therefore the two indices are independent of each other. We may also note that NDVI is conventionally a broadband index and, therefore, easy to measure using existing systems. PRI, on the other hand, requires hyperspectral sensors. Passive hyperspectral sensors have recently become available aboard satellites. MODIS ocean wavebands centred on 531 and 570nm are 10nm broad, which is much broader than the ideal for PRI but may nevertheless be useful.

As reported in the Grace *et al* paper, PRI has been found to be strongly correlated with $\varepsilon$ at the leaf scale, small canopy scale and recently at the ecosystem scale. It has also been shown that PRI provides an optical measure of Radiation Use Efficiency $\varepsilon$ across species and nutrient levels. Visualization of PRI over the surface of leaves provides a clear indication of how spatial variations in photosynthetic efficiency may vary over time. Now, there is considerable interest in using PRI at the large spatial scale (say from around $10m^2$ to $10km^2$) calculated from spectral reflectance measured on remote sensing platforms to assess $\varepsilon$ and model global ecosystem dynamics. The novel system described above makes such observation a practical possibility.

A benefit of using a multispectral lidar to measure PRI, rather than a passive hyperspectral instrument, is that canopy structure is an important factor in determining the overall reflectance since it encapsulates the transition from individual scattering elements with known hemispherical reflectance and transmittance properties to a far more complex arrangement where multiple interactions between the scatterers and the lower boundary (soil and understorey vegetation) combine to form the resulting (measured) signal at the top of the canopy. The scatterers themselves (leaves, stems, branches) vary in developmental stage and orientation, both of which have the potential to influence the PRI. Thus, when variations in PRI are seen using passive sensors, it is not immediately clear how far the apparent differences may be a consequence of variations in illumination and viewing angle, and canopy structure. The novel system allows vertical structure of the canopy to determine simultaneously with the PRI, and in particular allows separation of canopy from understorey and soil. Indeed, we can determine the PRI as a function of height above the ground surface, since multiple wavelength measurements are determined at each range (height) bin.

Referring again to Figure 3 then, if two of the wavelengths emitted and detected are selected to be 531 nm and, say, 550nm as a reference, the output data set 318 can include a traces of PRI against height at each sample location. This data might be in an array PRI(X,Y,Z) where, for the sake of illustration, latitude, longitude and altitude are expressed directly or through a convenient transformation in the dimensions X, Y and Z used to index the array. As mentioned above, the literature offers various options for the reference wavelength, such as 550, 570 or 571 nm.

**Fluorescence and Fraunhofer Lines**

During photosynthesis, part of the energy captured by chlorophyll is dissipated as fluorescence (re-emission of light energy at a longer wavelength than the excitation energy) within the waveband 650 - 800nm, with peaks at 690 and 740nm. Chlorophyll fluorescence, combined with NPQ (non-photochemical quenching) is interpreted as an expression of the balance between light harvesting (absorption), and light utilization in the photosynthetic process. The 690nm fluorescence signal from leaves and crops is therefore widely used by physiologists and agronomists as a field-based or laboratory-based diagnostic tool for detection of stress. In principle, this fluorescence is very closely related to the efficiency of light utilization as it represents 'wasted' energy.

It is usual to make inferences from the changes in fluorescence over several minutes following illumination. However, in the more natural state of continuous illumination by sunlight, photosynthetic organisms fluoresce continuously, thus adding a weak signal to the spectral reflectance. This is called solar-induced steady-state fluorescence, Fs, or 'passive fluorescence'. The novel instrument in a preferred embodiment includes an additional hyperspectral sensor 304e sensitive to this fluorescence signal, so that additional information can be gained corresponding to the locations scanned by the lidar system.

The passive fluorescence signal in practice is less than 3% of the reflected energy (and <2% in most cases), but in principle it can be separated from the reflectance signal. In particular, by using a narrow bandwidth receiver, our instrument design should be able to detect and measure plant fluorescence by examination of the faint radiance in the well known dark lines (Fraunhofer lines) observed within the solar spectrum, caused by absorption in the sun's outer atmosphere. There are several hundred of these, produced by absorption of energy by the cooler gases near the solar surface. Almost all of the lines are very narrow (0.04 - 0.4 nm), but only one of them (656.3 nm) is within the red region of the spectrum where most of the chlorophyll fluorescence occurs (650 - 800 nm). There are other dark lines in the solar radiation received at the earth's surface, produced by the absorption of energy by oxygen in the terrestrial atmosphere. Using an instrument mounted above the canopy, others have demonstrated a good relationship between 'passive' fluorescence measured at 760 nm, and the fluorescence parameters measured on leaves using traditional physiological methods (pulse-modulated chlorophyll fluorescence with a PAM2000 portable fluorimeter). Any of these wavelengths can be selected for the fluorescence measurement. Indeed, the SNR of the fluorescence measurement can be boosted by measuring in several of the narrow spectral windows.

Additionally to the sensing of passive fluorescence signals, there is the option to use active sources to excite fluorescence for measurement. This may be by the provision of additional laser sources, or using one or more of the lidar wavelengths for this additional purpose. By using the laser pulses at the shorter wavelength at 531 nm we will be able to optimize the chlorophyll fluorescence emittance at the red and far-red peaks (around 680 - 700 and 735 - 745 nm). The detected fluorescence signals may in that case be time-resolved (vertically resolved), provided that the pulse width and fluorescence stimulation-emission delay do not conspire to smear all height resolution. In practice, the delay between stimulation and emission of the fluorescent radiation is in the nanosecond range, which may allow meaningful height discrimination. Delays can be calibrated out of the signals by reference to the reflectance wavelength profiles. Even if time-of-flight resolution is not desired, time-gated detection should be applied in the circuitry 304-308, to register the fluorescence wavelength only in the instants following emission of a stimulating pulse.

Shorter wavelength excitation (say, 480 - 500 nm) could be used to trigger a blue/green fluorescence as well as the desired (red) chlorophyll fluorescence. This blue/green fluorescence is stronger than the red fluorescence, but is not well correlated with changes in leaf level physiology across all vegetation types. Therefore we prefer to concentrate on the red fluorescence and the green/blue fluorescence is either not stimulated, or is filtered by wavelength and/or gated out by timing circuitry.

Note that the Fraunhofer lines and other notches in the incident solar spectrum can in principle be exploited to improve the SNR of reflectance measurements, not only the fluorescent emissions.

The excitation radiation at 531 nm may stimulate fluorescence at wavelengths detected for the NDVI measurements. The contribution should be small (<2%), but in principle would introduce artefacts into the NVDI profile. To exclude the artificial contribution from the NDVI measurement, it is proposed to use gated detection in the NDVI measurement bands, synchronised with the excitation pulses, so as to ignore radiation received at the periods when fluorescence has been stimulated. (This is effectively the inverse of the gating function applied to enhance SNR in the measured stimulated fluorescence.)

### Canopy Water Content

There is an established index for assessing canopy water content with the Normalized Difference Water Index (NDWI), defined as:

$$NDWI = [(R_{860} - R_{1240})/(R_{860} + R_{1240})]$$

where subscripts again refer to reflectance at wavelengths in nm.

By emitting pulses of radiation at 860nm and 1240nm and measuring vertical responses at both wavelengths for each sample point, the novel system is able to assess the vertical distribution of water stress within a canopy.

Referring again to Figure 3 then, if two of the wavelengths emitted and detected are selected to be 860nm and 1240nm, then with appropriate processing the output data set 318 can include a trace of NDWI against height at each sample location. This data might be in an array NDWI(X,Y,Z) where, for the sake of illustration, latitude, longitude and altitude are expressed directly or through a convenient transformation in the dimensions X, Y and Z used to index the array.

The exact wavelengths are not critical, and others may be selected according to the quality of experimental results found, and of course practical issues with the availability and performance of the relevant emitters and detectors.

Referring again to Figure 4, the water content of vegetation can alternatively be determined by measuring reflectance at the two strong absorption lines around 900nm and 1100nm. In the shortwave infrared there area also water absorption bands around 1400nm, 1660nm and 1900nm. These can be used instead of or in addition to the wavelengths mentioned above.

### Polarisation

It will be understood that the radiation emitted and received back by the instrument will include both polarised and non-polarised components. Optional implementations of the apparatus include polarising filters in the detectors 304, either for certain wavelengths or for all wavelengths. Use of only the non-polarised component of the returned scattered pulse can improve the measurements by increasing the relative proportion of the signal originating from within the leaves rather than the surface.

In a preferred embodiment, the apparatus will measure both polarised and non-polarised signals, to allow comparison and maximise utilisation of the available radiation. The emitted radiation may of course be polarised, but the return signal may still be non-polarised, by scattering within the target medium.

### Conclusion

The following list identifies the novel wavelengths proposed for a preferred implementation of the multi-spectral lidar instrument:

- 531 nm (emission and detection, vertically resolved): Measures de-epoxidation of the xanthophyll pigments (used for PRI), and also for stimulation of fluorescence.
- 550 and/or 570 or 571 nm (emission and detection, vertically resolved): Reference waveband unaffected by the de-epoxidation (used for PRI)
- 690 and 740 nm (Detection only, no height resolution) or other lines for chlorophyll fluorescence, optionally using Fraunhofer/Oxygen wavelength windows and/or time gating to improve SNR.
- 860 and 1200nm, or similar (emission and detection, vertically resolved): Measurement of water absorption and estimation of NDWI.

The above specific wavelengths are of course examples. Other wavelengths offering similar sensitivity can be used instead or in parallel and wavelengths within a 5 or 10nm band either side will generally suffice. Specific alternatives and margins are given in various cases above.

The novel apparatus and analysis may be applied to carbon sequestration studies, forest management, forest health, tree health, agricultural crop monitoring, precision agriculture, and to improve the measurements of ground topography from survey lidar.

A particular application is to the measurement or estimation of 'gross primary productivity' (GPP), defined as the uptake of carbon (biomass accumulation) by the vegetation. The PRI provides a measure of light use efficiency $\varepsilon$ as explained above. It is well established that NDVI explains the fraction of absorbed radiation (fPAR/APAR) within the canopy. With incident PAR (photosynthetically active radiation) being a readily available dataset, GPP becomes available as the product of the measured parameters.

$$GPP = APAR \cdot \varepsilon$$

or

$$GPP = fPAR \cdot PAR \cdot \varepsilon$$

The ability to estimate these factors and multiply them in three dimensions greatly enhances the reliability of the valuable GPP result.

**Claims**

1. A method for the remote analysis of vegetation, the method comprising:

    - providing a remote sensing platform (100);
    - generating (300a-d) at said platform modulated emissions of laser radiation each having a different wavelength;
    - directing said emissions from said platform toward a target;
    - detecting (302, 304a-d) radiation reflected by the target at each of said wavelengths;
    - measuring for each wavelength the reflected intensity as it varies with time of flight, thereby to provide for each wavelength a measured profile (LOG) of intensity over a range of distances from the platform; and
    - combining (316) the intensities of reflected radiation in said profiles measured at first and second wavelengths to obtain a profile (318) of at least one derived parameter (NDVI, PPI, NDWI) of said target over said range of distances;

wherein there are at least four wavelengths directed and detected, a profile for a first derived parameter being derived from combination of the profiles measured for first and second wavelengths and a profile for a second derived parameter being derived from the profiles measured third and fourth wavelengths; wherein the plurality of wavelengths include a pair that are both in the visible region of the electromagnetic spectrum, one of them selected to be affected by de-epoxidation of xanthophyll pigments while the other remains unaffected by the de-epoxidation reaction, and wherein a profile (PRI) is obtained by combining the measured profiles of said pair of wavelengths;

wherein the plurality of wavelengths further includes a pair of wavelengths of which one is in the infrared region of the electromagnetic spectrum and the other is in the red region, and wherein a profile (NDVI) is obtained by combining the measured profiles of said pair of wavelengths; and

wherein the profile (PRI) obtained is multiplied in three dimensions with the profile (NDVI) obtained to obtain an estimation of carbon uptake in the analysed vegetation.

2. A method as claimed in claim 1 wherein said modulated emissions comprise simple pulse trains, whereby the strengths of reflections of the different emissions can be recognised and timed in the received signals.

3. A method as claimed in claim 1 wherein said modulated emissions comprise chirps or continuous coded waveforms, whereby the strengths of reflections of the different emissions can be recognised and timed in the received signals.

4. A method as claimed in claims 1, 2 or 3 wherein the laser radiation is generated by a tuneable laser switched to different wavelengths sequentially.

5. A method as claimed in any preceding claim wherein the detector for each wavelength is sensitive to a band of wavelengths less than 10nm wide, preferably less than 5nm or less than 2nm.

6. A method as claimed in claim 1 wherein the wavelength selected to be affected by de-epoxidation is substantially 531 nm, while the reference wavelength is in the range 540 - 590nm

7. A method as claimed in claim 1 wherein the plurality of wavelengths includes a pair of wavelengths both in the infrared region of the electromagnetic spectrum, one of them selected to be particularly absorbed by water while the other is relatively unaffected, and wherein a profile (NDWI) is obtained by combining the measured profiles of said pair of wavelengths.

8. A method as claimed in claim 7 wherein the reference wavelength is around 860nm (say 840 - 880nm), while the water-sensitive wavelength is around 1200nm (say 1180 - 1280nm), or around 1660nm (1620 - 1690nm, say).

9. A method as claimed in claim 1 wherein the infrared wavelength is in the range 760-900nm and the red wavelength is in the range 630-690nm.

10. A method as claimed in any preceding claim further including detection of radiation received from the target at at least one further wavelength not among those directed at the target from the platform, said wavelength being one at which chlorophyll fluorescence is observable.

11. A method as claimed in claim 10 wherein said fluorescence is caused by excitation by one of the laser wavelengths directed at the target from the platform.

12. A method as claimed in claim 10 or 11 wherein the detection is made with a selectivity better than 2nm, preferably better than 0.5nm, the wavelength being coincident with a trough in the spectrum of solar radiation typical at the earth's surface.

13. A method as claimed in any preceding claim wherein the detection discriminates polarised and non-polarised components of the reflected radiation.

14. An apparatus for remote analysis of vegetation, the apparatus including components for emitting, receiving and recording radiation at a plurality of wavelengths, and being adapted for deployment on a remote sensing platform so as to perform the method of any preceding claim.

**Patentansprüche**

1. Ein Verfahren zur Fernanalyse von Vegetation, wobei das Verfahren Folgendes beinhaltet:

  - Bereitstellen einer Fernerkundungsplattform (100);
  - Erzeugen (300a-d) an der Plattform von modulierten Emissionen von Laserstrahlung, wobei jede eine unterschiedliche Wellenlänge aufweist;
  - Lenken der Emissionen von der Plattform zu einem Ziel;
  - Detektieren (302, 304a-d) von Strahlung, die von dem Ziel bei jeder der Wellenlängen reflektiert wird;
  - Messen für jede Wellenlänge der reflektierten Intensität, da sie mit der Flugzeit variiert, um dadurch für jede Wellenlänge ein gemessenes Profil (LOG) von Intensität über einen Bereich von Entfernungen von der Plattform bereitzustellen; und
  - Kombinieren (316) der Intensitäten der reflektierten Strahlung in den Profilen, die bei einer ersten und zweiten Wellenlänge gemessen werden, um ein Profil (318) mindestens eines abgeleiteten Parameters (NDVI, PRI, NDWI) des Ziels über den Bereich von Entfernungen zu erhalten;

wobei Folgendes vorhanden ist: mindestens vier Wellenlängen, die gelenkt und detektiert werden, ein Profil für einen ersten abgeleiteten Parameter, der aus der Kombination der für die erste und die zweite Wellenlänge gemessenen Profile abgeleitet ist, und ein Profil für einen zweiten abgeleiteten Parameter, der aus den eine dritte und vierte Wellenlänge gemessenen Profilen abgeleitet ist;
wobei die Vielzahl von Wellenlängen ein Paar umfasst, die beide in dem sichtbaren Bereich des elektromagnetischen Spektrums sind, wobei eine davon ausgewählt ist, um durch Deepoxidation von Xanthophyllpigmenten beeinflusst zu werden, während die andere durch die Deepoxidationsreaktion unbeeinflusst bleibt, und wobei durch das Kombinieren der gemessenen Profile des Paars Wellenlängen ein Profil (PRI) erhalten wird;
wobei die Vielzahl von Wellenlängen ferner ein Paar Wellenlängen umfasst, von denen eine in dem Infrarotbereich des elektromagnetischen Spektrums ist und die andere in dem Rot-Bereich ist, und wobei durch das Kombinieren der gemessenen Profile des Paars Wellenlängen ein Profil (NDVI) erhalten wird; und
wobei das erhaltene Profil (PRI) in drei Dimensionen mit dem erhaltenen Profil (NDVI) multipliziert wird, um eine Schätzung der Kohlendioxidaufnahme in der analysierten Vegetation zu erhalten.

2. Verfahren gemäß Anspruch 1, wobei die modulierten Emissionen einfache Impulsfolgen beinhalten, wobei die Reflexionsstärken der unterschiedlichen Emissionen in den empfangenen Signalen erkannt und zeitlich festgelegt werden können.

3. Verfahren gemäß Anspruch 1, wobei die modulierten Emissionen Chirps oder kontinuierliche codierte Wellenformen beinhalten, wobei die Reflexionsstärken der unterschiedlichen Emissionen in den empfangenen Signalen erkannt und zeitlich festgelegt

**4.** Verfahren gemäß den Ansprüchen 1, 2 oder 3, wobei die Laserstrahlung durch einen abstimmbaren Laser erzeugt wird, der nacheinander auf unterschiedliche Wellenlängen geschaltet wird.

**5.** Verfahren gemäß einem der vorhergehenden Ansprüche, wobei der Detektor für jede Wellenlänge gegenüber einem Wellenlängenband mit einer Breite von weniger als 10 nm, vorzugsweise weniger als 5 nm oder weniger als 2 nm empfindlich ist.

**6.** Verfahren gemäß Anspruch 1, wobei die Wellenlänge, die ausgewählt ist, um durch Deepoxidation beeinflusst zu werden, im Wesentlichen 531 nm beträgt, während die Referenzwellenlänge im Bereich von 540-590 nm liegt.

**7.** Verfahren gemäß Anspruch 1, wobei die Vielzahl von Wellenlängen ein Paar Wellenlängen umfasst, die beide in dem Infrarotbereich des elektromagnetischen Spektrums sind, wobei eine davon ausgewählt ist, um insbesondere von Wasser absorbiert zu werden, während die andere relativ unbeeinflusst bleibt, und wobei durch das Kombinieren der gemessenen Profile des Paars Wellenlängen ein Profil (NDWI) erhalten wird.

**8.** Verfahren gemäß Anspruch 7, wobei die Referenzwellenlänge ungefähr 860 nm (in etwa 840-880 nm) beträgt, während die wasserempfindliche Wellenlänge ungefähr 1200 nm (in etwa 1180-1280 nm) oder ungefähr 1660 nm (in etwa 1620-1690 nm) beträgt.

**9.** Verfahren gemäß Anspruch 1, wobei die Infrarotwellenlänge im Bereich von 760-900 nm liegt und die Rot-Wellenläge im Bereich von 630-690 nm liegt.

**10.** Verfahren gemäß einem der vorhergehenden Ansprüche, das ferner die Detektion von von dem Ziel empfangener Strahlung bei mindestens einer weiteren Wellenlänge umfasst, die nicht unter jenen ist, die von der Plattform auf das Ziel gelenkt werden, wobei die Wellenlänge eine ist, bei der Chlorophyllfluoreszenz wahrnehmbar ist.

**11.** Verfahren gemäß Anspruch 10, wobei die Fluoreszenz mittels Anregung durch eine der von der Plattform auf das Ziel gelenkten Laserwellenlängen verursacht wird.

**12.** Verfahren gemäß Anspruch 10 oder 11, wobei die Detektion mit einer Selektivität von mehr als 2 nm, vorzugsweise mehr als 0,5 nm vorgenommen wird, wobei die Wellenlänge mit einer Rinne in dem Spektrum von Solarstrahlung, die an der Erdoberfläche typisch ist, übereinstimmt.

**13.** Verfahren gemäß einem der vorhergehenden Ansprüche, wobei die Detektion polarisierte und nichtpolarisierte Komponenten der reflektierten Strahlung unterscheidet.

**14.** Eine Vorrichtung zur Fernanalyse von Vegetation, wobei die Vorrichtung Komponenten zum Senden, Empfangen und Aufzeichnen von Strahlung bei einer Vielzahl von Wellenlängen umfasst und zum Einsatz auf einer Fernerkundungsplattform angepasst ist, um das Verfahren gemäß einem der vorhergehenden Ansprüche durchzuführen.

**Revendications**

**1.** Une méthode pour l'analyse à distance de végétation, la méthode comprenant :

- le fait de fournir une plateforme de captage à distance (100) ;
- le fait de générer (300a à d) au niveau de ladite plateforme des émissions modulées de rayonnement laser, chacune ayant une longueur d'onde différente ;
- le fait de diriger lesdites émissions à partir de ladite plateforme vers une cible ;
- le fait de détecter (302, 304a à d) un rayonnement réfléchi par la cible à chacune desdites longueurs d'onde ;
- le fait de mesurer pour chaque longueur d'onde l'intensité réfléchie à mesure qu'elle varie avec le temps de vol, afin de fournir ainsi pour chaque longueur d'onde un profil mesuré (LOG) d'intensité sur une gamme de distances à partir de la plateforme ; et
- le fait de combiner (316) les intensités de rayonnement réfléchi dans lesdits profils mesurés à des première et deuxième longueurs d'onde afin d'obtenir un profil (318) d'au moins un paramètre dérivé (NDVI, PRI, NDWI) de ladite cible sur ladite gamme de distances ;

dans laquelle il y a au moins quatre longueurs d'onde dirigées et détectées, un profil pour un premier paramètre dérivé étant dérivé d'une combinaison des profils mesurés pour des première et deuxième longueurs d'onde et un profil pour un deuxième paramètre dérivé étant dérivé profils mesurés troisième et quatrième longueurs d'onde ; dans laquelle la pluralité de longueurs d'onde inclut une paire de longueurs d'onde qui sont toutes les deux dans la région visible du spectre électromagnétique, l'une d'elles étant sélectionnée pour être affectée par dé-époxydation de pigments de xanthophylle tandis que l'autre demeure non affectée par la réaction de dé-époxydation, et dans laquelle un profil (PRI) est obtenu en combinant les profils mesurés de ladite paire de longueurs d'onde ;

dans laquelle la pluralité de longueurs d'onde inclut en outre une paire de longueurs d'onde dont l'une se trouve dans la région infrarouge du spectre électromagnétique et l'autre se trouve dans la région rouge, et dans laquelle un profil (NDVI) est obtenu en combinant les profils mesurés de ladite paire de longueurs d'onde ; et

dans laquelle le profil (PRI) obtenu est multiplié en trois dimensions avec le profil (NDVI) obtenu afin d'obtenir une estimation d'absorption de carbone dans la végétation analysée.

2.  Une méthode telle que revendiquée dans la revendication 1 dans laquelle lesdites émissions modulées comprennent des trains d'impulsions simples, moyennant quoi les forces de réflexions des différentes émissions peuvent être reconnues et temporisées dans les signaux reçus.

3.  Une méthode telle que revendiquée dans la revendication 1 dans laquelle lesdites émissions modulées comprennent des compressions d'impulsions ou des formes d'onde codées continues, moyennant quoi les forces de réflexions des différentes émissions peuvent être reconnues et temporisées dans les signaux reçus.

4.  Une méthode telle que revendiquée dans les revendications 1, 2 ou 3 dans laquelle le rayonnement laser est généré par un laser pouvant être syntonisé commuté sur différentes longueurs d'onde séquentiellement.

5.  Une méthode telle que revendiquée dans n'importe quelle revendication précédente dans laquelle le détecteur pour chaque longueur d'onde est sensible à une bande de longueurs d'onde inférieure à 10 nm de large, de préférence inférieure à 5 nm ou inférieure à 2 nm.

6.  Une méthode telle que revendiquée dans la revendication 1 dans laquelle la longueur d'onde sélectionnée pour être affectée par dé-époxydation fait substantiellement 531 nm, tandis que la longueur d'onde de référence est dans la gamme allant de 540 à 590 nm.

7.  Une méthode telle que revendiquée dans la revendication 1 dans laquelle la pluralité de longueurs d'onde inclut une paire de longueurs d'onde toutes les deux dans la région infrarouge du spectre électromagnétique, l'une d'elles étant sélectionnée pour être particulièrement absorbée par de l'eau tandis que l'autre est relativement non affectée, et dans laquelle un profil (NDWI) est obtenu en combinant les profils mesurés de ladite paire de longueurs d'onde.

8.  Une méthode telle que revendiquée dans la revendication 7 dans laquelle la longueur d'onde de référence fait autour de 860 nm (disons de 840 à 880 nm), tandis que la longueur d'onde sensible à l'eau fait autour de 1 200 nm (disons de 1 180 à 1 280 nm), ou autour de 1 660 nm (de 1 620 à 1 690 nm, disons).

9.  Une méthode telle que revendiquée dans la revendication 1 dans laquelle la longueur d'onde infrarouge est dans la gamme allant de 760 à 900 nm et la longueur d'onde rouge est dans la gamme allant de 630 à 690 nm.

10. Une méthode telle que revendiquée dans n'importe quelle revendication précédente incluant en outre une détection de rayonnement reçu de la cible à au moins une longueur d'onde supplémentaire non parmi celles dirigées vers la cible à partir de la plateforme, ladite longueur d'onde étant une longueur d'onde à laquelle une fluorescence de chlorophylle peut être observée.

11. Une méthode telle que revendiquée dans la revendication 10 dans laquelle ladite fluorescence est causée par excitation par l'une des longueurs d'onde de laser dirigées à la cible à partir de la plateforme.

12. Une méthode telle que revendiquée dans la revendication 10 ou la revendication 11 dans laquelle la détection est réalisée avec une sélectivité meilleure que 2 nm, de préférence meilleure que 0,5 nm, la longueur d'onde étant coïncidente avec un creux dans le spectre de rayonnement solaire typique à la surface de la terre.

13. Une méthode telle que revendiquée dans n'importe quelle revendication précédente dans laquelle la détection différencie des composants polarisés et non polarisés du rayonnement réfléchi.

14. Un appareil pour une analyse à distance de végétation, l'appareil incluant des composants pour émettre, recevoir et enregistrer un rayonnement à une pluralité de longueurs d'onde, et étant conçu pour un déploiement sur une plateforme de captage à distance de façon à effectuer la méthode de n'importe quelle revendication précédente.

EP 2 294 447 B1

*Fig. 1*

Fig. 2

*Fig. 3*

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102005030451 A1

**Non-patent literature cited in the description**

- **GRACE, J ; NICHOL, C.J. ; DISNEY, M ; LEWIS, P ; QUAIFE, T.** Can we measure terrestrial photosynthetic rate from space directly, using reflectance and fluorescence. *Global Change Biology,* 2007, vol. 13, 1-14

- **HARDING et al.** The Swath Imaging Multi-polarization Photon-counting Lidar (SIMPL): A Spaceflight Prototype. *2008 IEEE International Geoscience & Remote Sensing Symposium,* 06 July 2008